# EUROPEAN PATENT SPECIFICATION

(11) **EP 4 478 921 B1**
(45) Date of publication and mention of the grant of the patent: **16.04.2025**
(21) Application number: 24714510.5
(22) Date of filing: 29.03.2024
(51) Int. Cl.: A47J 37/06, F24C 15/00, F24C 15/32, F24C 7/08

(54) **COOKING APPLIANCE COMPRISING VIEWING WINDOW AND IMAGE SENSOR FOR CAPTURING IMAGES THROUGH THE VIEWING WINDOW**
KOCHGERÄT MIT SICHTFENSTER UND BILDSENSOR ZUR BILDERFASSUNG DURCH DAS SICHTFENSTER
APPAREIL DE CUISSON COMPRENANT UNE FENÊTRE DE VISUALISATION ET UN CAPTEUR D'IMAGE POUR CAPTURER DES IMAGES À TRAVERS LA FENÊTRE DE VISUALISATION

(30) Priority: 08.05.2023 EP 23172123
(43) Date of publication of application: 25.12.2024
(73) Proprietor: Versuni Holding B.V., 5656 AE Eindhoven (NL)
(72) Inventor: WEISS, Sascha, 5656 AE Eindhoven (NL)
(74) Representative: Vollering, Stefanus Franciscus Maria
(86) International application number: PCT/EP2024/058794
(87) International publication number: WO 2024/230987

(56) References cited:
- WO-A1-2022/078839
- DE-A1- 102020 108 572
- US-A1- 2022 202 236

## Description

### FIELD OF THE INVENTION

This invention relates to a cooking appliance having a viewing window for enabling an image sensor to capture images of food being cooked in the cooking appliance through the viewing window.

### BACKGROUND OF THE INVENTION

Various different types of cooking appliance are known, such as table-top cooking appliances that are positionable by the consumer on a table-top or kitchen countertop.

One type of table-top cooking appliance is the air fryer. Air fryers are already common kitchen appliances but their popularity continues to grow. Air fryers may, for example, take the form of portable ovens which are designed to fit on a kitchen work surface.

Air fryers can be distinguished from conventional convection ovens at least partly by the direction of air circulation through the cooking chamber. The air fryer's cooking chamber has, when orientated for use, a top and a bottom. Referring to an air fryer of US 2022/202236 A1, a circulation system, e.g. in the form of a fan driven by a motor, is arranged to circulate air upwardly through food received in the cooking chamber in the direction of the top and/or downwardly through food received in the cooking chamber in the direction of the bottom.

By, for instance, mounting the air fryer's heating element proximal to the top of cooking chamber, air having passed upwardly through the food can be reheated by the heating element before being passed around a duct and being introduced back into the food at the bottom. Such an arrangement has various advantages, particularly in terms of the frying effect which can be achieved with no or only a relatively small amount of cooking oil being required.

Another type of table-top cooking appliance is the so-called air cooker, whose circulation system may be arranged to circulate air laterally, e.g. horizontally, across and through food received in the cooking chamber, with the air being laterally directed towards a side portion of the cooking chamber.

Including an image sensor in a cooking appliance, such as an air fryer or air cooker, can play an important role in smart assisted cooking. For example, referring to an air fryer of US 2022/202236 A1, a food type can be recognized by food image recognition and a cooking setting can be determined based on food image analysis. Moreover, food images can be used for cooking process control, browning control, remote monitoring, burning prevention, and content for social media sharing. DE 10 2020 108572 A1 is another example of cooking appliance comprising a cooking chamber, a heating element, a viewing window and an image sensor arranged to enable image capture of food received in the cooking chamber through the viewing window.

Other applications of image sensors in cooking appliances include capturing images and/or video for identification of food amount, e.g. volume, food distribution within the cooking chamber, and doneness level.

However, the relatively rapid airflow in cooking appliances having circulation systems, and in air fryers in particular, together with aerosols generated during cooking, can cause rapid pollution of a viewing window, in other words viewport, through which the image sensor captures images of the food received in the cooking chamber.

Such pollution can mean that algorithms, e.g. trained algorithms, employed to derive the above-mentioned food-related information from image(s) of the food may be unable to function reliably. In the worst case, the viewing window may be polluted to such an extent that even capturing an image of the cooking chamber through the viewing window is precluded.

One possible option for removing pollution from the viewing window is pyrolytic cleaning. However, this relies on exposing the viewing window to relatively high temperatures which may not be attainable using the heating system of typical cooking appliances, and especially table-top cooking appliances, such as air fryers and air cookers. Moreover, such high temperatures could risk damaging the image sensor.

Other potential solutions, such as detachably mounting the viewing window to facilitate cleaning and/or replacement of the viewing window, may be inconvenient for the user and costly to implement.

### SUMMARY OF THE INVENTION

The invention is defined by the claims.

According to examples in accordance with an aspect of the invention, there is provided a cooking appliance comprising: a cooking chamber; a heating element; a viewing window; an image sensor arranged to enable image capture of food received in the cooking chamber through the viewing window; a circulation system arranged to circulate air heated by the heating element in the cooking chamber; and a flow guiding element arranged in a path of an airflow provided by the circulation system in a direction of the viewing window, the flow guiding element comprising a ramp arranged to displace at least part of the airflow away from the viewing window and guide said at least part of the airflow across the viewing window.

By the ramp of the flow guiding element redirecting the airflow away from the viewing window, e.g. from a plane of the viewing window, pollution of the viewing window by, in particular, aerosols generated during cooking of the food received in the cooking chamber can be alleviated. Moreover, since the airflow displaced from the viewing window is nonetheless guided by the ramp across the viewing window, the flow guiding element may provide minimal disruption to heated air circulation in the cooking chamber, and therefore may exert minimal influence over cooking of the food received in the cooking chamber.

The term "plane of the viewing window" as used herein may refer to a plane of a planar surface of the viewing window, e.g. that is exposed to the interior of the cooking chamber. Alternatively, the term "plane of the viewing window" may refer to a plane that is tangential to a non-planar surface of the viewing window, e.g. that is exposed to the interior of the cooking chamber.

Such a tangential plane may, for example, extend perpendicular to a normal extending through a center of the viewing window.

Thus, the term "plane of the viewing window" is not intended to refer only to planar viewing windows. In some embodiments, the viewing window is non-planar, e.g. having a non-planar surface.

Examples of non-planar viewing windows may include viewing windows having a curved contour, e.g. a convex surface.

Such a non-planar viewing window may, for example, be a lens, e.g. provided in addition to a lens included in the image sensor arranged behind the viewing window.

It is generally noted that the airflow may be provided along an interior surface delimiting, or arranged within, the cooking chamber.

In other words, the airflow may be a surface airflow provided along such an interior surface.

In some embodiments, the interior surface is included in a surface of the cooking chamber wall that delimits the cooking chamber. Alternatively, the interior surface may be included in a surface of a partition wall arranged in the cooking chamber.

In some embodiments, the flow guiding element comprises a protrusion that protrudes from the interior surface along which the airflow is provided.

Such a protrusion may provide a relatively straightforward and effective way of implementing the flow guiding element, for example relative to alternative solutions involving a ramp-comprising recess defined in the interior surface.

In some embodiments, the protrusion extends at least partly around the viewing window, for example with the ramp also extending at least partly around the viewing window.

In such embodiments, the protrusion may displace air flowing from various directions towards the viewing window away from the plane of the viewing window, and across the viewing window.

The protrusion may, for example, delimit a hole, e.g. a frustroconical hole, through which light passes to reach the viewing window.

In some embodiments, the protrusion is detachable from the interior surface.

This may assist with cleaning the viewing window (as well as the protrusion itself), particularly in embodiments in which the protrusion extends at least partly around the viewing window.

In some embodiments, the ramp extends in the direction of the viewing window to a point that is spaced apart from the viewing window along an axis extending normal to the viewing window. Thus, the ramp may extend to a height that is different from that of the plane of the viewing window, thereby facilitating displacement of the airflow away from the plane of the viewing window and across the viewing window.

The flow guiding element may comprise a defined edge at which extension of the ramp in the direction of the viewing window terminates. Such a defined, e.g. sharp, edge may assist to ensure that the airflow initially guided up the ramp is directed by the flow guiding element across, rather than back towards, the viewing window.

In some embodiments, the flow guiding element is arranged to guide a portion of the airflow, e.g. passing along the interior surface, laterally around the viewing window.

Such lateral guiding of the airflow around the viewing window may assist to minimize disruption caused by the flow guiding element to heated air circulation in the cooking chamber, and may thus assist to minimize the flow guiding element's influence over cooking of the food received in the cooking chamber.

In some embodiments, the flow guiding element comprises sides that face in directions transverse to the airflow, with one or both of the sides being connected to a base of the ramp via a curved portion that curvedly extends from the ramp around to the respective side.

Such curved portion(s) may assist the flow guiding element to guide a portion of the airflow laterally around the viewing window.

In some embodiments, the viewing window is arranged in a cooking chamber wall that at least partly delimits the cooking chamber. Alternatively, the viewing window may be arranged in the partition wall located within the cooking chamber.

In embodiments in which the cooking appliance comprises the partition wall, and irrespective of whether or not the viewing window is arranged in the partition wall, an inner surface of the partition wall may at least partly delimit an inner cooking chamber arranged within the cooking chamber.

A duct may be defined between the cooking chamber wall that at least partly delimits the cooking chamber and an outer surface of the partition wall.

In such embodiments, the circulation system may be arranged to circulate at least part of the heated air around the duct, into and through the inner cooking chamber, and back into the duct, with the duct being arranged to fluidly connect a top and a bottom of the inner cooking chamber to each other such that the circulating at least part of the heated air passing through the inner cooking chamber traverses a height of the inner cooking chamber.

By the heated air passing through the inner cooking chamber traversing a height of the inner cooking chamber, the heated air may be delivered through food received in the inner cooking chamber. This may assist to achieve frying-type cooking effect.

In some embodiments, an air guide member is arranged to guide the at least part of the heated air circulated by the circulation system into the inner cooking chamber, and along the inner surface of the partition wall in the direction of the viewing window.

In such embodiments, the air guide member may be arranged in the duct. Thus, the air guide member may assist to guide the at least part of the heated air from the duct into the inner cooking chamber.

The air guide member, for example a star fish-type air guide member, may assist to provide the airflow along the interior surface in the direction of the viewing window.

In some embodiments, the air guide member is arranged to guide the airflow along the interior surface, e.g. the inner surface of the partition wall.

In such embodiments, the air guide member may be arranged to provide a rotational component to the airflow, such that the path of the airflow winds around the interior surface. This rotational component may be provided in addition to the airflow's traversing of the height of the inner cooking chamber.

More generally, the cooking chamber and the circulation system may be arranged such that, when the cooking appliance is orientated for use, at least part of the heated air traverses a height of the cooking chamber.

It is noted that upward and/or downward heated airflow through the cooking chamber may not require the partition wall, the inner cooking chamber and the duct described above. Thus, in some embodiments the partition wall, the inner cooking chamber and the duct may be omitted.

For example, instead of the partition wall, the inner cooking chamber and the duct, the cooking appliance may include a perforate food supporting base, e.g. a mesh or grid plate, arranged or arrangeable inside the cooking chamber for supporting food. In such embodiments, mass heated air circulation within the cooking chamber may be provided, with both upward and downward airflow directions through the cooking chamber being possible.

The cooking chamber may be at least partly delimited by a base portion, a top portion, and a side portion extending between the base portion and the top portion. It is noted that the terms "base" and "top" in this context may refer to an in-use orientation of the cooking appliance, for example when the cooking appliance is positioned on a kitchen table or countertop, with the base portion being proximal to the kitchen table or countertop, the top portion being distal with respect to the kitchen table or countertop, and the side portion upstanding from the base portion in the direction of the top portion.

In some embodiment, the viewing window is arranged in or proximal to the top portion. Such positioning of the viewing window may facilitate capturing of images of the food received in the cooking chamber.

The flow guiding element may be arranged at or proximal to the top portion.

For example, the flow guiding element and the viewing window may both be arranged at or proximal to the top portion.

Thus, the flow guiding element may be arranged to minimize pollution of the viewing window arranged in or proximal to the top portion.

It is noted that the term "proximal to" in this context may mean that the relevant component, e.g. the flow guiding element and/or the viewing window, is arranged at/in the side portion but closer to the top portion than to the base portion.

In some embodiments, the ramp slopes from the top portion downwardly towards the base portion. Airflow may therefore be guided downwardly by the ramp towards the base portion of the cooking chamber, and thus away from the viewing window, e.g. away from the viewing window arranged in the top portion.

In some embodiments, the top portion comprises a heat reflector. Such a heat reflector may, among other things, assist to protect the image sensor from the heat within the cooking chamber when the viewing window is arranged in the heat reflector and/or in an upper part of the side portion.

In some embodiments, the cooking appliance comprises a seal around the viewing window for restricting fluid passage around the viewing window towards the image sensor.

Such a seal may assist to minimize the risk of damage to the image sensor, for example by hot air and/or steam passing between the cooking chamber wall, or the partition wall, and the viewing window.

In at least some embodiments, the cooking appliance comprises at least one light emitter arranged to illuminate at least part of the cooking chamber through the viewing window and/or through a further window arranged adjacent to the viewing window.

In embodiments in which the cooking appliance comprises the further window, the ramp of the flow guiding element may be arranged to displace at least part of the airflow away from the further window, e.g. a plane of the further viewing window, and guide the at least part of the airflow across the further window.

In such embodiments, the alleviation of pollution of the viewing window and/or the further window by the flow guiding element may also assist to minimize disruption to illumination of the cooking chamber provided by the light emitter(s).

More generally, the cooking appliance may be a domestic cooking appliance, for example a domestic cooking appliance in the form of a table-top cooking appliance.

The cooking appliance, e.g. domestic cooking appliance, may be an oven.

Such an oven may, for example, be a table-top oven or a built-in type oven for installation in a kitchen.

In some embodiments, the cooking appliance is an air fryer or an air cooker.

It is noted that the air fryer and the air cooker may be examples of table-top cooking appliances.

When the cooking appliance is an air fryer, the circulation system may be arranged to circulate air upwardly through food received in the cooking chamber in the direction of the top portion and/or downwardly through food received in the cooking chamber in the direction of the base portion.

When the cooking appliance is an air cooker, the circulation system may be arranged to circulate air laterally across and through food received in the cooking chamber, with the air being laterally directed towards the side portion.

These and other aspects will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a cooking appliance according to a first example;
FIG. 2 provides a perspective view of a cooking appliance camera assembly according to an example;
FIGs. 3A to 3C provide various schematic views of a cooking appliance according to a second example;
FIG. 4 schematically depicts a cooking appliance according to a third example;
FIGs. 5A and 5B schematically illustrate airflow redirection by a flow guiding element according to an example;
FIG. 6 shows simulated airflows proximal to a viewing window when a spherical flow guiding element is arranged adjacent to the viewing window;
FIGs. 7A to 7C show simulated airflows proximal to a viewing window when the flow guiding element shown in FIGs. 5A and 5B is arranged adjacent to the viewing window;
FIG. 8 schematically depicts a flow guiding element according to another example; and
FIG. 9 provides a perspective view of a top portion of a cooking appliance according to a further example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a cooking appliance comprising a cooking chamber, a heating element, and a circulation system arranged to circulate air heated by the heating element in the cooking chamber. The circulation system provides an airflow within the cooking chamber, e.g. along an interior surface delimiting, or arranged within, the cooking chamber. The cooking appliance further comprises a viewing window towards which the airflow is directed, and an image sensor arranged to enable image capture of food received in the cooking chamber through the viewing window. A flow guiding element is arranged in a path of the airflow. The flow guiding element comprises a ramp arranged to displace at least part of the airflow away from the viewing window, e.g. away from a plane of the viewing window, and guide the at least part of the airflow across the viewing window.

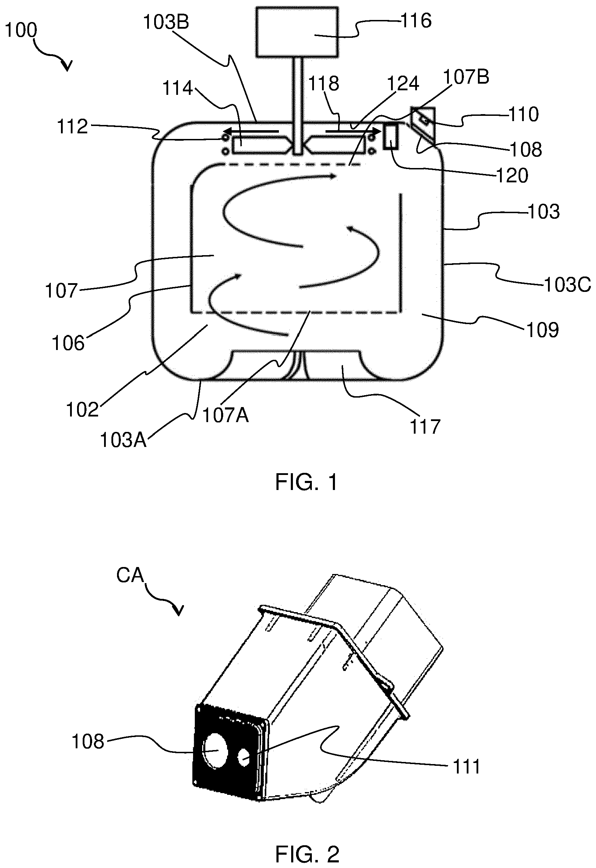

FIG. 1 schematically depicts a cooking appliance 100 according to an example. The cooking appliance 100 in this example is in the form of an air fryer. However, the present disclosure is more generally applicable to any type of cooking appliance 100.

Particular mention is made of the cooking appliance 100 being a domestic cooking appliance 100, for example a domestic cooking appliance 100 in the form of a table-top cooking appliance 100.

In some embodiments, the cooking appliance 100 is an air cooker. It is noted that the air fryer and the air cooker may be examples of table-top cooking appliances 100.

The cooking appliance 100 comprises a cooking chamber 102 in which food (not visible) is receivable. The cooking chamber 102 may be at least partly delimited by a cooking chamber wall 103.

The cooking chamber 102 may be at least partly delimited by a base portion 103A, a top portion 103B, and a side portion 103C extending between the base portion 103A and the top portion 103B. The base portion 103A, the top portion 103B, and the side portion 103C may be included in, e.g. may define, the cooking chamber wall 103.

It is noted that the terms "base" and "top" in this context may refer to an in-use orientation of the cooking appliance 100, as shown in FIG. 1. Such an in-use orientation may be adopted, for example, when the cooking appliance 100 is positioned on a kitchen table or countertop, with the base portion 103A being proximal to the kitchen table or countertop, the top portion 103B being distal with respect to the kitchen table or countertop, and the side portion 103C upstanding from the base portion 103A in the direction of the top portion 103B.

In some embodiments, such as shown in FIG. 1, the cooking appliance 100 includes a partition wall 106 whose inner surface at least partly delimits an inner cooking chamber 107 arranged within the cooking chamber 102. In such embodiments, food may be received specifically within the inner cooking chamber 107.

In some embodiments, the top portion 103B comprises a heat reflector. Such a heat reflector may, among other things, assist to protect sensitive components of the cooking appliance 100, such as control circuitry, from the heat within the cooking chamber 102.

The heat reflector may be formed from any suitable material, such as a metal or metal alloy, e.g. steel. The heat reflector is preferably formed from galvanized plate metal.

The cooking appliance 100 comprises a viewing window 108, whose function will be explained in more detail herein below. In some embodiments, such as shown in FIG. 1, the viewing window 108 is arranged in the cooking chamber wall 103. For example, the viewing window 108 may be arranged in, or at least proximal to, the top portion 103B.

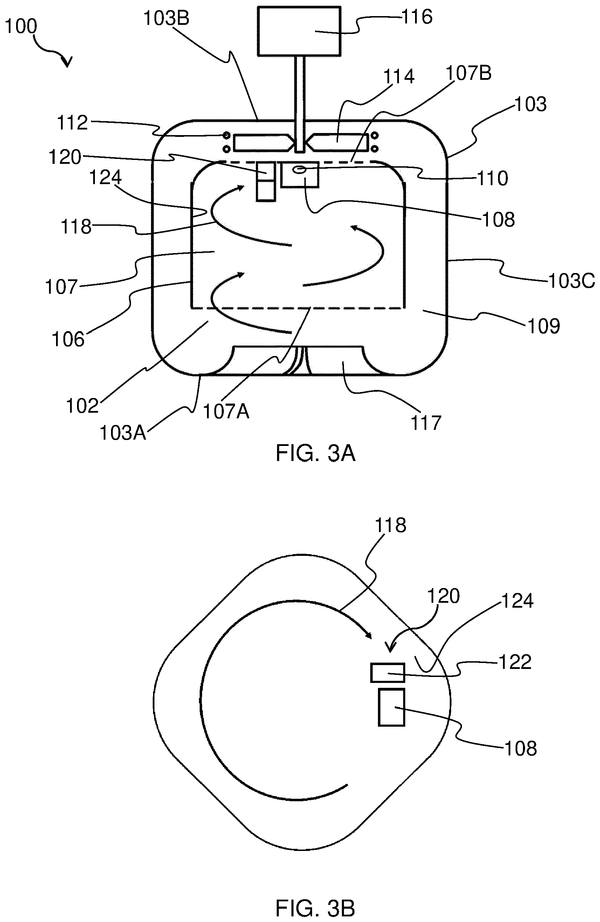

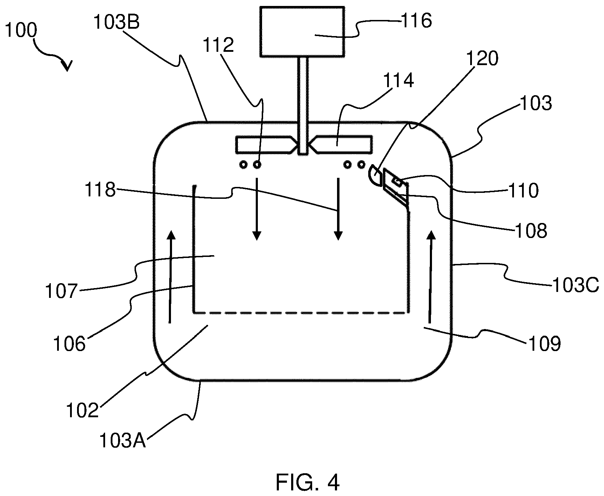

In alternative embodiments, such as shown in FIGs. 3A to 3C and 4, the viewing window 108 is arranged in the partition wall 106, subject, of course, to the cooking appliance 100 including such a partition wall 106.

In embodiments in which the cooking appliance 100 includes the partition wall 106, a duct 109 may be defined between the cooking chamber wall 103 and an outer surface of the partition wall 106. Heated air may be circulated around the duct 109, into and through the inner cooking chamber 107, and back into the duct 109.

In such embodiments, the duct 109 may be arranged to fluidly connect a top and a bottom of the inner cooking chamber 107 to each other such that the circulating heated air passing through the inner cooking chamber 107 traverses a height of the inner cooking chamber 107.

To this end, one or more apertures 107A may be provided in a bottom of the inner cooking chamber 107, with one or more openings 107B being provided in the top of the inner cooking chamber 107. In such embodiments, the duct 109 may provide a fluid connection between the opening(s) 107B and the aperture(s) 107A that extends around the outer surface of the partition wall 106.

In such embodiments, the aperture(s) 107A may be defined by apertures of a perforate food supporting base. The perforate food supporting base may be regarded as a platform on which food for cooking/baking/frying/steaming may be supported.

In some embodiments, the cooking appliance 100 comprises a basket whose bottom portion corresponds to the perforate food supporting base.

More generally, the cooking chamber 102 may be arranged such that, when the cooking appliance 100 is orientated for use, at least part of the heated air traverses a height of the cooking chamber 102.

The traversing of the height of the cooking chamber 102 may mean that the at least part of the heated air passes upwardly and/or downwardly through the cooking chamber 102.

In other words, this traversing of the height of the cooking chamber 102 may mean upward and/or downward heated airflow through the food received in the cooking chamber 102. This may assist to provide the frying effect provided by the cooking appliance 100, e.g. air fryer.

It is noted that such upward and/or downward heated airflow through the cooking chamber 102 may not require the partition wall 106, the inner cooking chamber 107 and the duct 109 described above. Thus, in some embodiments the partition wall 106, the inner cooking chamber 107 and the duct 109 may be omitted.

For example, instead of the partition wall 106, the inner cooking chamber 107 and the duct 109, the cooking appliance 100 may include a perforate food supporting base, e.g. a mesh or grid plate, arranged or arrangeable inside the cooking chamber 102 for supporting food. In such embodiments, mass heated air circulation within the cooking chamber 102 may be provided, with both upward and downward airflow directions through the cooking chamber 102 being possible.

The cooking appliance 100 comprises an image sensor 110 arranged to enable image capture of food received in the cooking chamber 102, e.g. received in the inner cooking chamber 107 in the case of the non-limiting examples shown in FIGs. 1, 3A to 3C and 4, through the viewing window 108.

Such image capture may enable identification of a food type, amount, distribution and/or doneness level of the food received in the cooking chamber 102, e.g. in the inner cooking chamber 107.

Such identification may be implemented via image analysis performed by a processing system included in the cooking appliance 100 and/or in a processing system included in a cloud-based server and/or in an external user device, such as a smartphone or tablet computer, separate from the cooking appliance 100.

Any suitable type of image sensor 110 may be contemplated, for example a charge coupled device (CCD) image sensor 110 or a complementary metal-oxide-semiconductor (CMOS) image sensor 110.

In at least some embodiments, the viewing window 108 is formed of a suitable optically transmissive/transparent and thermally robust material.

The viewing window 108 may be made of glass.

Such a viewing window 108, e.g. a glass window 108, arranged between the cooking chamber 102, e.g. the inner cooking chamber 107, and the image sensor 110 may assist to protect the image sensor 110 from cooking conditions in the cooking chamber 102.

In some embodiments, the cooking appliance 100 comprises a seal around the viewing window 108 for restricting fluid passage around the viewing window 108 towards the image sensor 110.

Such a seal may assist to minimize the risk of damage to the image sensor 110, for example by hot air and/or steam passing between the cooking chamber wall 103, or the partition wall 106, and the viewing window 108.

In embodiments, such as shown in FIG. 1, in which the cooking appliance 100 includes the partition wall 106, the inner cooking chamber 107 and the duct 109, the image sensor 110 and the viewing window 108 may be arranged so that the image sensor 110 can capture images of the inner cooking chamber 107 through the duct 109.

To this end, a gap may be defined in the partition wall 106, through which gap the image sensor 110 can capture images of the inner cooking chamber 107.

In at least some embodiments, and referring to FIG. 2, the cooking appliance 100 comprises at least one light emitter arranged to illuminate at least part of the cooking chamber 102, e.g. the inner cooking chamber 107, through the viewing window 108 and/or through a further window 111.

Any suitable type of light emitter can be contemplated. In at least some embodiments, the at least one light emitter comprises one or more light emitting diodes.

In embodiments, such as shown in FIG. 2, in which the cooking appliance 100 includes the further window 111, the further window 111 may be arranged adjacent to the viewing window 108.

The viewing window 108 may be regarded as being included in, e.g. may be defined by, a transparent plate. Alternatively, the viewing window 108 may be included in a window assembly comprising a plurality of transparent elements.

In embodiments in which the cooking appliance 100 comprises the further window 111, the further window 111 and the viewing window 108 may, for example, correspond to respective transparent elements included in such a window assembly. An example of this is shown in FIG. 2.

In some embodiments, the image sensor 110 and the viewing window 108 may be included, e.g. together with the light emitter(s) and/or the further window 111, if present, in a camera assembly CA.

Such a camera assembly CA may facilitate mounting of the image sensor 110 and the viewing window 108 in the cooking appliance 100, since the camera assembly CA may define the spatial relationship between the image sensor 110 and the viewing window 108 prior to the camera assembly CA being positioned in the cooking appliance 100.

More generally, the cooking appliance 100 includes a heating element 112, and a circulation system 114, 116 arranged to circulate air heated by the heating element 112 in the cooking chamber 102.

The heating element 112 can have any suitable design. In some embodiments, the heating element 112 comprises a resistive heating element 112. Particular mention is made of a spiral resistive heating element 112.

Air can, for example, be circulated by the circulation system 114, 116 through space(s) between coils of such a spiral resistive heating element 112 in order to heat the air. Such coils are schematically depicted in FIGs. 1, 3A, 3C and 4.

In at least some embodiments, the circulation system 114, 116 comprises a fan 114 and a motor 116, with rotation of the fan 114 by the motor 116 causing the circulating of air.

In some embodiments, such as shown in FIGs. 1, 3A to 3C and 4, the circulation system 114, 116 is arranged to circulate at least part of the air heated by the heating element 112 around the duct 109, into and through the inner cooking chamber 107, and back into the duct 109.

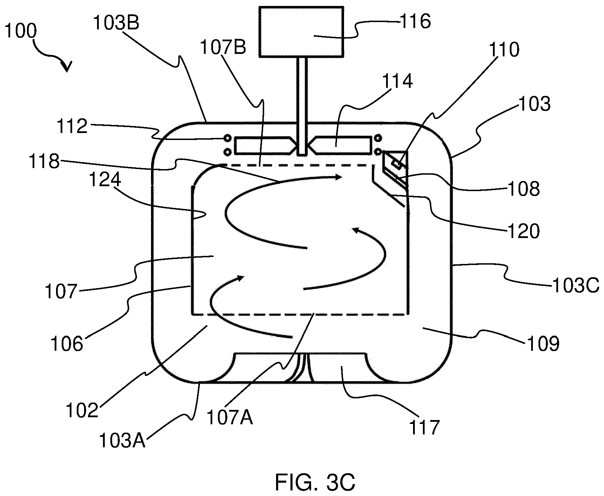

The at least part of the air heated by the heating element 112 may be directed upwardly through the inner cooking chamber 107, as shown in FIGs. 1, 3A and 3C. Alternatively, the at least part of the air heated by the heating element 112 may be directed downwardly through the inner cooking chamber 107, as shown in FIG. 4.

It is also reiterated that in alternative embodiments in which the partition wall 106, the inner cooking chamber 107 and the duct 109 are omitted, the circulation system 114, 116 may provide mass heated air circulation within the cooking chamber 102, with both upward and downward airflow directions through the cooking chamber 102 being possible.

With specific reference to FIGs. 1 and 3A to 3C, the cooking appliance 100, e.g. air fryer, may include an air guide member 117 arranged to guide the at least part of the heated air circulated by the circulation system 114, 116 into the inner cooking chamber 107.

In such embodiments, the air guide member 117 may be arranged in the duct 109. Thus, the air guide member 117 may assist to guide the at least part of the heated air from the duct 109 into the inner cooking chamber 107.

Any suitable design may be contemplated for the air guide member 117. The air guide member 117 may, for example, comprise a so-called star-fish shape. The star-fish shape comprises a plurality of radial fins which are shaped to guide the at least part of the heated air circulated by the circulation system 114, 116 into the inner cooking chamber 107.

More generally, the circulation system 114, 116 provides an airflow 118 within the cooking chamber 102 in a direction of the viewing window 108.

Due to the requirement for the image sensor 110 to capture images of the food, the viewing window 108, in other words camera viewport, is located in an area near the cooking space in which the food is receivable in the cooking chamber 102. However, this area may be positioned, e.g. fully positioned, in a main cooking airflow path. This may mean that the viewing window 108 risks becoming polluted by particles, e.g. oil particles, carried by this airflow.

Air speeds and directions within the cooking chamber 102 may be established from computational fluid dynamics (CFD) and laboratory analysis.

For example, cooking appliances 100 of the type shown in FIG. 1 in which the motor 116 rotates the fan 114 at a speed of 2650 revolutions per minute +/- 10% have been found to provide the following flow speeds: magnitude: 3.5 - 5.0 m/s; X-direction (at/proximal to the top portion 103B): 2.3 - 3.2 m/s; Y-direction (at/proximal to the top portion 103B): 1.9 - 2.8 m/s; and Z-direction (at/proximal to the top portion 103B): <0.5 m/s.

Values for the flow speeds may vary according to the area of interest, but the above values are considered to provide a representative insight concerning air speeds that can be provided in the area in which the viewing window 108 is located.

In general, air speeds provided by the circulation system 114, 116 may be in the range of 2-5 m/s.

Flow vectors may also be established from CFD analysis. A "snapshot" of a dynamic process in one plane may be derived from such analysis. This may be sufficient to obtain an indication concerning the flow in the area in which the viewing window 108 is located.

For example, focusing on the plane in which the viewing window 108 is arranged, further insights can be obtained concerning how the air is moving. It can be observed, via splitting into X/Y/Z flow actions, that the Z-direction flow is minor compared to X-direction and Y-direction flows. Thus, airflow in the area in which the viewing window 108 is located can be approximated as a planar problem.

Moreover, potential causes of pollution of the viewing window 108 may include: (i) "pure" airflow which sporadically transports relatively small particles close to the surface of the viewing window 108 which then adhere to this surface; (ii) the airflow coming along with an aerosol, in other words air combined with relatively sticky, e.g. oil-based, particles of various sizes, with higher temperatures of the surface of the viewing window 108 increasing the risk of such particles, e.g. oil drops, becoming stuck thereto; and (iii) fat/oil (and potentially water) mixture(s) in the cooking chamber 102 becoming sufficiently hot to "explode", with particles being thereby driven towards the surface of the viewing window 108.

Cause (i) may be considered to have a relatively minor influence on pollution of the viewing window 108. However, cause (ii) may have a major influence, noting that the temperature of the surface of the viewing window 108 may not be high enough to cause pyrolytic removal of particles, e.g. oil drops, that have become stuck thereto.

The relative influence of cause (iii) may be highly dependent on temperatures, view-related factors and distances. For example, cause (iii) may have less influence if the heating element 112 is arranged behind a heat reflector so that the food received in the cooking chamber 102 is located in the shadow of the radiation provided by the heating element 112. However, particles arising from the above-mentioned "explosions" may likely form part of the aerosol described in relation to cause (ii).

Referring to FIGs. 1, 3A to 3C, 4, 5A and 5B, the cooking appliance 100 according to the present disclosure accordingly includes a flow guiding element 120 arranged in a path of the airflow 118 provided by the circulation system 114, 116 in a direction of the viewing window 108.

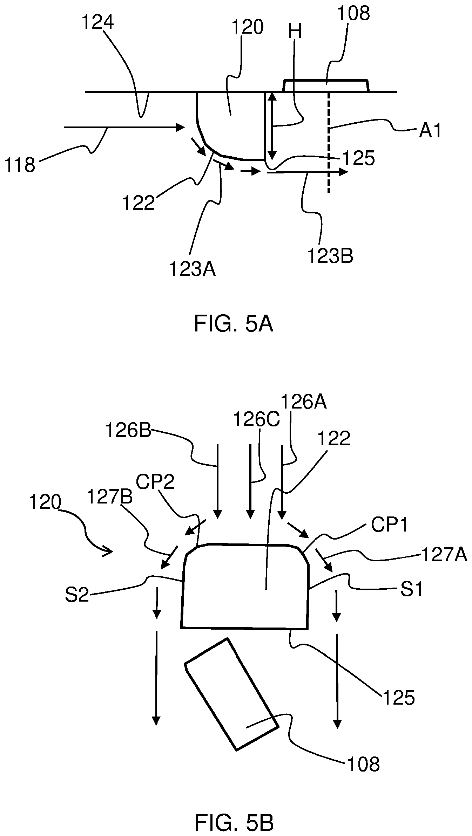

As best shown in FIG. 5A, the flow guiding element 120 comprises a ramp 122 arranged to displace at least part of the airflow 118 away from a plane of the viewing window 108, as denoted by the arrows 123A, and guide the at least part of the airflow 118 across the viewing window 108, as denoted by the arrow 123B.

By the ramp 122 of the flow guiding element 120 redirecting the airflow 118 away from the plane of the viewing window 108, pollution of the viewing window 108 by, in particular, aerosols generated during cooking of the food received in the cooking chamber 102 can be alleviated. Moreover, since the airflow displaced from the plane of the viewing window 108 is nonetheless guided by the ramp 122 across the viewing window 108, the flow guiding element 120 may provide minimal disruption to heated air circulation in the cooking chamber 102, and therefore may exert minimal influence over cooking of the food received in the cooking chamber 102.

The flow guiding element 120 can be regarded as flow breaker(s) that redirect flow around the critical area in which the viewing window 108 is located, without losing/disrupting the main air frying flow. The latter may ensure that superior cooking performance is maintained in spite of the inclusion of the flow guiding element 120.

It is noted that the flow guiding element 120 may be geometrically identifiable, e.g. visible, and its effect may be measurable, e.g. by measuring air speed drop in the relevant area in which the viewing window 108 is located.

The flow guiding element 120 can be arranged in any suitable manner provided that the flow guiding element 120 is able to redirect flow in the above-described manner.

In some embodiments, such as shown in FIG. 1, the flow guiding element 120 is arranged at or proximal to the top portion 103B of the cooking chamber wall 103. For example, the flow guiding element 120 and the viewing window 108 may both be arranged at or proximal to the top portion 103B. Thus, the flow guiding element 120 may be arranged to minimize pollution of the viewing window 108 arranged in or proximal to the top portion 103B.

In some embodiments, such as shown in FIG. 1, the ramp 122 slopes from the top portion 103B downwardly towards the base portion 103A. The airflow 118 may therefore be guided downwardly by the ramp 122 towards the base portion 103A of the cooking chamber 102, and thus away from the viewing window 108, e.g. away from the viewing window 108 arranged in the top portion 103B.

As a general remark, the airflow 118 may be provided along an interior surface 124 delimiting, or arranged within, the cooking chamber 102. In other words, the airflow 118 may be a surface airflow 118 provided along such an interior surface 124.

In some embodiments, the interior surface 124 is included in a surface of the cooking chamber wall 103 that delimits the cooking chamber 102. Alternatively, the interior surface 124 may be included in a surface, e.g. the inner surface, of the partition wall 106.

In embodiments, such as shown in FIGs. 1 and 3A to 3C, in which the cooking appliance 100 comprises the air guide member 117, the air guide member 117 may be arranged to guide the airflow 118 along the interior surface 124, e.g. the inner surface of the partition wall 106.

In such embodiments, and as best shown in FIG. 3B, the air guide member 117, e.g. star fish-type air guide member 117, may be arranged to provide a rotational component to the airflow 118, such that the path of the airflow 118 winds around the interior surface 124. This rotational component may be provided in addition to the airflow's 118 traversing of the height of the inner cooking chamber 107.

In some embodiments, such as shown in FIGs. 1, 3A to 3C, 4, 5A and 5B, the flow guiding element 120 comprises a protrusion that protrudes from the interior surface 124 along which the airflow 118 is provided.

Such a protrusion may provide a relatively straightforward and effective way of implementing the flow guiding element 120, for example relative to alternative solutions involving a ramp-comprising recess defined in the interior surface 124.

In some embodiments, and referring again to FIG. 5A, the ramp 122 extends in the direction of the viewing window 108 to a point that is spaced apart from the viewing window 108 along an axis A1 extending normal to the viewing window 108. Thus, the ramp 122 may extend to a height H that is different from that of the plane of the viewing window 108, thereby facilitating displacement of the airflow 118 away from the plane of the viewing window 108 and across the viewing window 108.

The flow guiding element 120 may comprise a defined edge 125 at which extension of the ramp 122, e.g. from the interior surface 124, in the direction of the viewing window 108 terminates. Such a defined, e.g. sharp, edge 125 may assist to ensure that the airflow 123A initially guided up the ramp 122 is directed by the flow guiding element 120 across, rather than back towards, the viewing window 108.

In some embodiments, and referring now to FIG. 5B, the flow guiding element 120 is arranged to guide a portion 126A, 126B of the airflow 118, e.g. passing along the interior surface 124, laterally around the viewing window 108. Such lateral guiding of the airflow 118 around the viewing window 108 may assist to minimize disruption caused by the flow guiding element 120 to heated air circulation in the cooking chamber 102, and may thus assist to minimize the flow guiding element's 120 influence over cooking of the food received in the cooking chamber 102.

It is noted that the part of the airflow 118 denoted by the arrow 126C in FIG. 5B corresponds to the above-described part of the airflow 118 that is displaced by the ramp 122 away from the plane of the viewing window 108 and guided across the viewing window 108.

In some embodiments, and still referring to FIG. 5B, the flow guiding element 120 comprises sides S1, S2 that face in directions transverse to the airflow 118, with one or both of the sides S1, S2 being connected to a base of the ramp 122 via a curved portion CP1, CP2 that curvedly extends from the ramp 122 around to the respective side S1, S2. Such curved portion(s) CP1, CP2 may assist the flow guiding element 120 to guide the portion 126A, 126B of the airflow laterally around the viewing window 108, as denoted in FIG. 5B by the arrows 127A, 127B.

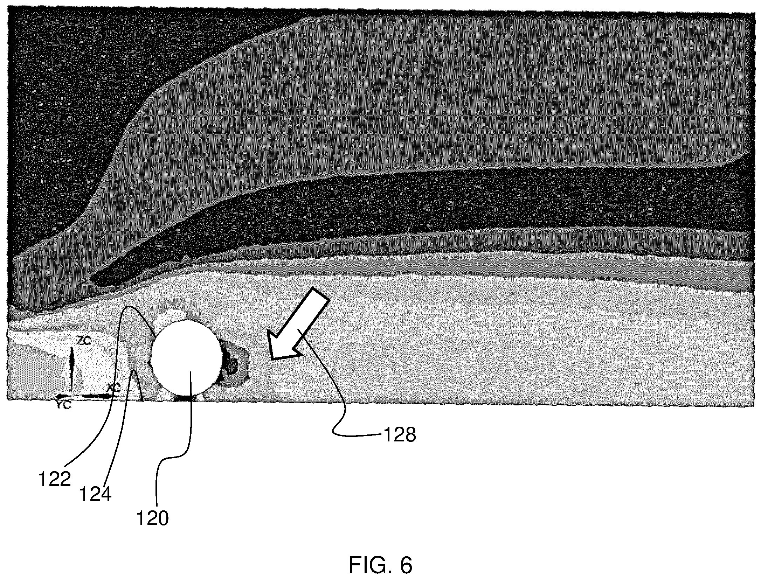

FIG. 6 shows CFD simulated airflows proximal to a viewing window 108, whose location is indicated by the arrow 128, when a spherical flow guiding element 120 is arranged adjacent to the viewing window 108.

This CFD simulation was constructed using an idealized space, with an inlet flow of 5 m/s being applied that enters the air space from the left in the +X direction (from left to right). The spherical flow guiding element 120, which has a diameter of 20 mm in this non-limiting example, was found to lower the airflow speed near the viewing window 108 to 1 - 2 m/s compared to 3.5 - 5 m/s when no flow guiding element 120 is employed. This represents an improvement of around a factor of two, which may translate into two times less particulate matter being deposited on the surface of viewing window 108 over time.

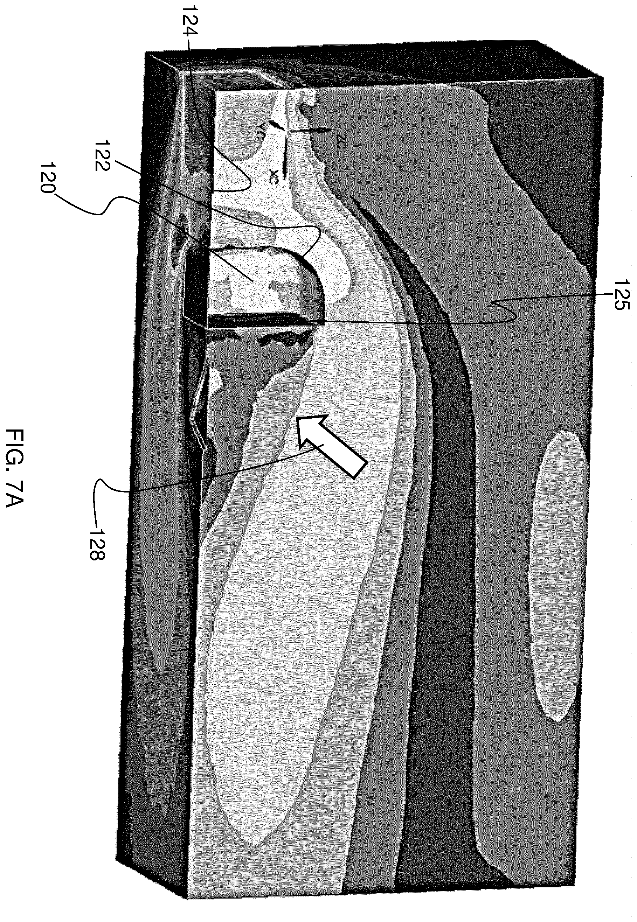

FIGs. 7A to 7C show CFD simulated airflows proximal to a viewing window 108 when the flow guiding element 120 shown in FIGs. 5A and 5B is arranged adjacent to the viewing window 108. This flow guiding element 120 design was found to be effective in casting a flow shadow in which the viewing window 108 could be located. In this non-limiting example, the airflow speed near the viewing window 108 was less than 1 m/s, corresponding to a factor of five improvement relative to the scenario in which no flow guiding element 120 is employed.

FIG. 7A, in common with FIG. 6, illustrates displacement of at least part of the airflow 118 away from a plane of the viewing window 108 and guiding of the at least part of the airflow 118 across the viewing window 108.

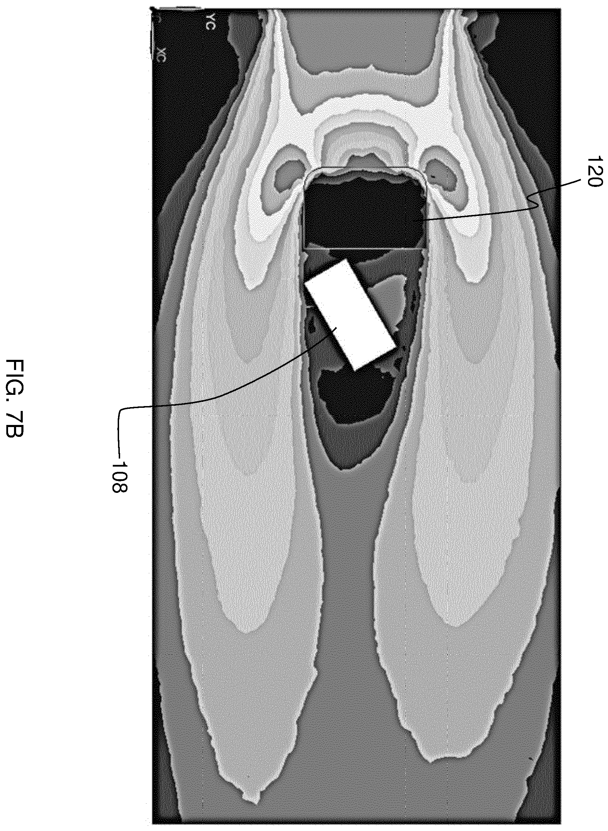

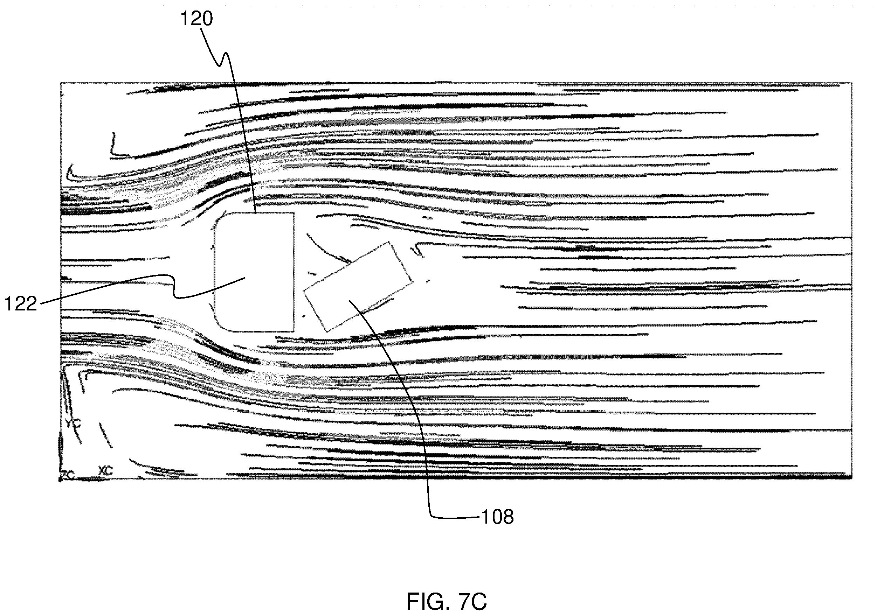

FIGs. 7B and 7C illustrate guiding of a portion 126A, 126B of the airflow 118, e.g. passing along the interior surface 124, laterally around the viewing window 108, as described above with reference to FIG. 5B.

This evidence shows that the viewing window 108 can be protected from the airflow 118, or at least local flow proximal to the viewing window 108 can be markedly reduced, by flow redirection via the flow guiding element 120. In this way, accumulation of pollution on the viewing window 108 over time can be minimized or prevented.

It is noted that the flow guiding elements 120 shown in FIGs. 6 and 7A to 7C are provided merely as illustrative non-limiting examples, and the specific shape/form, curvatures, and dimensions of the flow guiding element 120 may vary, e.g. according to the particular architecture of the cooking appliance 100 in which the flow guiding element 120 is to be incorporated.

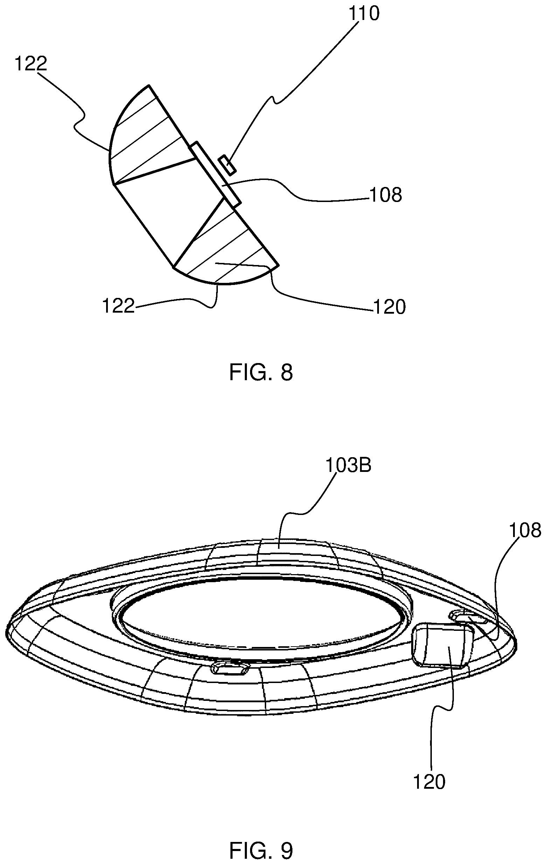

In some embodiments, such as shown in FIG. 8, the flow guiding element 120 comprises, e.g. is in the form of, a protrusion that extends at least partly around the viewing window 108, for example with the ramp 122 also extending at least partly around the viewing window 108.

In such embodiments, the protrusion may displace air flowing from various directions towards the viewing window 108 away from the plane of the viewing window 108, and across the viewing window 108.

The protrusion may, for example, delimit a hole, e.g. a frustroconical hole, through which light passes to reach the viewing window 108.

Alternatively or additionally, the protrusion may be detachable from the interior surface 124.

This may assist with cleaning the viewing window 108 (as well as the protrusion itself), particularly in embodiments in which the protrusion extends at least partly around the viewing window 108.

In some embodiments, such as shown in FIGs. 1 and 9, the viewing window 108 is arranged in the top portion 103B, and in particular in the heat reflector.

This positioning of the viewing window 108, as well as facilitating image capture of food within the cooking chamber 102, may assist to protect the image sensor 110 from the heat within the cooking chamber 102.

Alternatively or additionally, the flow guiding element 120 may be arranged at or proximal to the top portion 103B, and in particular at or proximal to the heat reflector.

In some embodiments, such as shown in FIG. 9, the flow guiding element 120 may be arranged at a corner of the top portion 103B, e.g. heat reflector.

This corner-positioning of the flow guiding element 120 may facilitate design of the flow guiding element 120, e.g. with appropriate dimensions, curvatures, etc., to provide enhanced redirection of the airflow 118 away from the viewing window 108.

Moreover, such corner positioning of the flow guiding element 120 may reflect that in practice, e.g. in a real cooking appliance 100 architecture, the viewing window 108 and the image sensor 110 may be ideally positioned at or proximal to the top portion 103B, e.g. heat reflector, to facilitate imaging of the cooking space by the image sensor 110.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A cooking appliance (100) comprising:
a cooking chamber (102);
a heating element (112);
a viewing window (108);
an image sensor (110) arranged to enable image capture of food received in the cooking chamber through the viewing window;
and a circulation system (114, 116) , the cooking appliance being **characterized in that** said circulation system (114, 116) is arranged to circulate air heated by the heating element in the cooking chamber; and **in that**
a flow guiding element (120) is arranged in a path of an airflow (118) provided by the circulation system in a direction of the viewing window, the flow guiding element comprising a ramp (122) arranged to displace at least part of the airflow away from the viewing window and guide said at least part of the airflow across the viewing window.

2. The cooking appliance (100) according to claim 1, wherein the flow guiding element (120) comprises a protrusion that protrudes from an interior surface (124) along which the airflow (118) is provided; optionally wherein the protrusion extends at least partly around the viewing window (108).

3. The cooking appliance (100) according to claim 1 or claim 2, wherein the ramp (122) extends in the direction of the viewing window (108) to a point (125) that is spaced apart from the viewing window along an axis (A1) extending normal to the viewing window.

4. The cooking appliance (100) according to any one of claims 1 to 3, wherein the flow guiding element (120) comprises a defined edge at which extension of the ramp (122) in the direction of the viewing window (108) terminates.

5. The cooking appliance (100) according to any one of claims 1 to 4, wherein the flow guiding element (120) is arranged to guide a portion of the airflow (118) laterally around the viewing window (108).

6. The cooking appliance (100) according to claim 5, wherein the flow guiding element (120) comprises sides (S1, S2) that face in directions transverse to the airflow (118), wherein one or both of the sides are connected to a base of the ramp (122) via a curved portion (CP1, CP2) that curvedly extends from the ramp around to the respective side.

7. The cooking appliance (100) according to any one of claims 1 to 6, wherein the viewing window (108) is arranged in a cooking chamber wall (103) that at least partly delimits the cooking chamber (102) or is arranged in a partition wall (106) located within the cooking chamber.

8. The cooking appliance (100) according to claim 7, wherein an inner surface of the partition wall (106) at least partly delimits an inner cooking chamber (107) arranged within the cooking chamber (102), a duct (109) being defined between the cooking chamber wall (103) and an outer surface of the partition wall, wherein the circulation system (114, 116) is arranged to circulate at least part of the heated air around the duct, into and through the inner cooking chamber, and back into the duct, the duct being arranged to fluidly connect a top and a bottom of the inner cooking chamber to each other such that the circulating at least part of the heated air passing through the inner cooking chamber traverses a height of the inner cooking chamber.

9. The cooking appliance (100) according to claim 8, comprising an air guide member (117) arranged to guide the at least part of the heated air circulated by the circulation system (114, 116) into the inner cooking chamber (107), and along the inner surface of the partition wall (106) in the direction of the viewing window (108).

10. The cooking appliance (100) according to claim 9, wherein the air guide member (117) is arranged in the duct (109).

11. The cooking appliance (100) according to any one of claims 1 to 10, wherein the cooking chamber (102) is at least partly delimited by a base portion (103A), a top portion (103B), and a side portion (103C) extending between the base portion and the top portion, wherein the viewing window (108) is arranged in or proximal to the top portion.

12. The cooking appliance (100) according to claim 11, wherein the flow guiding element (120) is arranged at or proximal to the top portion (103B).

13. The cooking appliance (100) according to claim 11 or claim 12, wherein the ramp (122) slopes from the top portion (103B) downwardly towards the base portion (103A).

14. The cooking appliance (100) according to any one of claims 11 to 13, wherein the top portion (103B) comprises a heat reflector.

15. The cooking appliance (100) according to any one of claims 1 to 14, comprising at least one light emitter arranged to illuminate at least part of the cooking chamber (102) through the viewing window (108) and/or through a further window (111) arranged adjacent to the viewing window.

## Patentansprüche

1. Kochgerät (100), umfassend:
eine Kochkammer (102);
ein Heizelement (112);
ein Sichtfenster (108);
einen Bildsensor (110), der angeordnet ist, um Bilderfassung eines in der Kochkammer aufgenommenen Lebensmittels durch das Sichtfenster zu ermöglichen;
und ein Zirkulationssystem (114, 116), wobei das Kochgerät **dadurch gekennzeichnet ist, dass** das Zirkulationssystem (114, 116) angeordnet ist, um durch das Heizelement erhitzte Luft in der Kochkammer zirkulieren zu lassen; und dadurch, dass
ein Führungselement (120) in einem Pfad einer Luftströmung (118) angeordnet ist, die durch das Zirkulationssystem in einer Richtung des Sichtfensters bereitgestellt wird, wobei das Führungselement eine Rampe (122) umfasst, die angeordnet ist, um zumindest einen Teil der Luftströmung von dem Sichtfenster weg zu verdrängen und zumindest einen Teil der Luftströmung über das Sichtfenster zu leiten.

2. Kochgerät (100) nach Anspruch 1, wobei das Führungselement (120) einen Vorsprung umfasst, der von einer Innenoberfläche (124) vorsteht, entlang der die Luftströmung (118) bereitgestellt wird; wobei sich der Vorsprung optional zumindest teilweise um das Sichtfenster (108) herum erstreckt.

3. Kochgerät (100) nach Anspruch 1 oder Anspruch 2, wobei sich die Rampe (122) in Richtung des Sichtfensters (108) zu einem Punkt (125) erstreckt, der entlang einer sich normal zum Sichtfenster erstreckenden Achse (A1) von dem Sichtfenster beabstandet ist.

4. Kochgerät (100) nach einem der Ansprüche 1 bis 3, wobei das Führungselement (120) eine definierte Kante umfasst, an der eine Erstreckung der Rampe (122) in Richtung des Sichtfensters (108) endet.

5. Kochgerät (100) nach einem der Ansprüche 1 bis 4, wobei das Führungselement (120) angeordnet ist, um einen Abschnitt der Luftströmung (118) seitlich um das Sichtfenster (108) herumzuleiten.

6. Kochgerät (100) nach Anspruch 5, wobei das Führungselement (120) Seiten (S1, S2) umfasst, die in Richtungen quer zu der Luftströmung (118) weisen, wobei eine oder beide der Seiten über einen gekrümmten Abschnitt (CP1, CP2), der sich gekrümmt von der Rampe um die jeweilige Seite herum erstreckt, mit einer Basis der Rampe (122) verbunden sind.

7. Kochgerät (100) nach einem der Ansprüche 1 bis 6, wobei das Sichtfenster (108) in einer Kochkammerwand (103) angeordnet ist, welche die Kochkammer (102) zumindest teilweise begrenzt, oder in einer Trennwand (106) angeordnet ist, die sich in der Kochkammer befindet.

8. Kochgerät (100) nach Anspruch 7, wobei eine Innenoberfläche der Trennwand (106) zumindest teilweise eine innere Kochkammer (107) begrenzt, die innerhalb der Kochkammer (102) angeordnet ist, wobei ein Kanal (109) zwischen der Kochkammerwand (103) und einer Außenoberfläche der Trennwand definiert ist, wobei das Zirkulationssystem (114, 116) angeordnet ist, um zumindest einen Teil der erhitzten Luft um den Kanal herum, in und durch die innere Kochkammer, und zurück in den Kanal zirkulieren zu lassen, wobei der Kanal angeordnet ist, um eine Oberseite und eine Unterseite der inneren Kochkammer fluidisch miteinander zu verbinden, sodass das Zirkulieren zumindest eines Teils der erhitzten Luft, der durch die innere Kochkammer hindurch verläuft, eine Höhe der inneren Kochkammer durchquert.

9. Kochgerät (100) nach Anspruch 8, umfassend ein Luftführungsorgan (117), das angeordnet ist, um zumindest einen Teil der durch das Zirkulationssystem (114, 116) zirkulierten erhitzten Luft in die innere Kochkammer (107) und entlang der Innenoberfläche der Trennwand (106) in Richtung des Sichtfensters (108) zu führen.

10. Kochgerät (100) nach Anspruch 9, wobei das Luftführungsorgan (117) in dem Kanal (109) angeordnet ist.

11. Kochgerät (100) nach einem der Ansprüche 1 bis 10, wobei die Kochkammer (102) zumindest teilweise durch einen Basisabschnitt (103A), einen oberen Abschnitt (103B) und einen Seitenabschnitt (103C) begrenzt ist, der sich zwischen dem Basisabschnitt und dem oberen Abschnitt erstreckt, wobei das Sichtfenster (108) im oberen Abschnitt oder proximal dazu angeordnet ist.

12. Kochgerät (100) nach Anspruch 11, wobei das Führungselement (120) im oberen Abschnitts (103B) oder proximal dazu angeordnet ist.

13. Kochgerät (100) nach Anspruch 11 oder Anspruch 12, wobei die Rampe (122) von dem oberen Abschnitt (103B) abwärts in Richtung des Basisabschnitts (103A) abfällt.

14. Kochgerät (100) nach einem der Ansprüche 11 bis 13, wobei der obere Abschnitt (103B) einen Wärmereflektor umfasst.

15. Kochgerät (100) nach einem der Ansprüche 1 bis 14, umfassend zumindest einen Lichtemitter, welcher angeordnet ist, um zumindest einen Teil der Kochkammer (102) durch das Sichtfenster (108) und/oder durch ein weiteres Fenster (111) hindurch, das neben dem Sichtfenster angeordnet ist, zu beleuchten.

## Revendications

1. Appareil de cuisson (100) comprenant :
une chambre de cuisson (102) ;
un élément chauffant (112) ;
une fenêtre de visualisation (108) ;
un capteur d'image (110) agencé pour permettre la capture d'image des aliments reçus dans la chambre de cuisson à travers la fenêtre de visualisation ;
et un système de circulation (114, 116), l'appareil de cuisson étant **caractérisé en ce que** ledit système de circulation (114, 116) est agencé pour faire circuler l'air chauffé par l'élément chauffant dans la chambre de cuisson ; et **en ce que**
un élément de guidage de flux (120) est agencé dans un trajet d'un flux d'air (118) fourni par le système de circulation dans une direction de la fenêtre de visualisation, l'élément de guidage de flux comprenant une rampe (122) agencée pour déplacer au moins une partie du flux d'air à distance de la fenêtre de visualisation et guider ladite au moins une partie du flux d'air le long de la fenêtre de visualisation.

2. Appareil de cuisson (100) selon la revendication 1, dans lequel l'élément de guidage de flux (120) comprend une saillie qui fait saillie à partir d'une surface intérieure (124) le long de laquelle le flux d'air (118) est fourni ; éventuellement dans lequel la saillie s'étend au moins en partie autour de la fenêtre de visualisation (108).

3. Appareil de cuisson (100) selon la revendication 1 ou la revendication 2, dans lequel la rampe (122) s'étend dans la direction de la fenêtre de visualisation (108) jusqu'à un point (125) qui est espacé de la fenêtre de visualisation le long d'un axe (A1) s'étendant perpendiculairement à la fenêtre de visualisation.

4. Appareil de cuisson (100) selon l'une quelconque des revendications 1 à 3, dans lequel l'élément de guidage de flux (120) comprend un bord défini au niveau duquel se termine l'extension de la rampe (122) en direction de la fenêtre de visualisation (108).

5. Appareil de cuisson (100) selon l'une quelconque des revendications 1 à 4, dans lequel l'élément de guidage de flux (120) est agencé pour guider une partie du flux d'air (118) latéralement autour de la fenêtre de visualisation (108).

6. Appareil de cuisson (100) selon la revendication 5, dans lequel l'élément de guidage de flux (120) comprend des côtés (S1, S2) qui font face dans des directions transversales au flux d'air (118), dans lequel l'un et/ou l'autre des côtés sont reliés à une base de la rampe (122) par l'intermédiaire d'une partie incurvée (CP1, CP2) qui s'étend de manière incurvée autour de la rampe jusqu'au côté respectif.

7. Appareil de cuisson (100) selon l'une quelconque des revendications 1 à 6, dans lequel la fenêtre de visualisation (108) est agencée dans une paroi (103) de chambre de cuisson qui délimite au moins partiellement la chambre de cuisson (102) ou est agencée dans une paroi de séparation (106) située à l'intérieur de la chambre de cuisson.

8. Appareil de cuisson (100) selon la revendication 7, dans lequel une surface intérieure de la paroi de séparation (106) délimite au moins partiellement une chambre de cuisson intérieure (107) agencée à l'intérieur de la chambre de cuisson (102), un conduit (109) étant défini entre la paroi (103) de chambre de cuisson et une surface extérieure de la paroi de séparation, dans lequel le système de circulation (114, 116) est agencé pour faire circuler au moins une partie de l'air chauffé autour du conduit, dans et à travers la chambre de cuisson intérieure, et de nouveau dans le conduit, le conduit étant agencé pour relier fluidiquement une partie haute et une partie fond de la chambre de cuisson intérieure l'une à l'autre de telle sorte que la au moins une partie en circulation de l'air chauffé traversant la chambre de cuisson intérieure traverse une hauteur de la chambre de cuisson intérieure.

9. Appareil de cuisson (100) selon la revendication 8, comprenant un élément de guidage d'air (117) agencé pour guider la au moins une partie de l'air chauffé mise en circulation par le système de circulation (114, 116) dans la chambre de cuisson intérieure (107) et le long de la surface intérieure de la paroi de séparation (106) en direction de la fenêtre de visualisation (108).

10. Appareil de cuisson (100) selon la revendication 9, dans lequel l'élément de guidage d'air (117) est agencé dans le conduit (109).

11. Appareil de cuisson (100) selon l'une quelconque des revendications 1 à 10, dans lequel la chambre de cuisson (102) est au moins partiellement délimitée par une partie de base (103A), une partie supérieure (103B) et une partie latérale (103C) s'étendant entre la partie de base et la partie supérieure, dans lequel la fenêtre de visualisation (108) est agencée dans ou à proximité de la partie supérieure.

12. Appareil de cuisson (100) selon la revendication 11, dans lequel l'élément de guidage de flux (120) est agencé au niveau ou à proximité de la partie supérieure (103B).

13. Appareil de cuisson (100) selon la revendication 11 ou la revendication 12, dans lequel la rampe (122) s'incline de la partie supérieure (103B) vers le bas en direction de la partie de base (103A).

14. Appareil de cuisson (100) selon l'une quelconque des revendications 11 à 13, dans lequel la partie supérieure (103B) comprend un réflecteur de chaleur.

15. Appareil de cuisson (100) selon l'une quelconque des revendications 1 à 14, comprenant au moins un émetteur de lumière agencé pour éclairer au moins une partie de la chambre de cuisson (102) à travers la fenêtre de visualisation (108) et/ou à travers une autre fenêtre (111) agencée de manière adjacente à la fenêtre de visualisation.
